# EUROPEAN PATENT APPLICATION

(11) **EP 4 800 054 A1**
(43) Date of publication of application: **02.09.2026**
(21) Application number: 24882024.3
(22) Date of filing: 02.09.2024
(51) Int. Cl.: C08G 77/388, C08L 83/04

(54) **ALDIMINE-MODIFIED SILICONE, MOISTURE-CURABLE SILICONE RESIN COMPOSITION CONTAINING SAME, AND METHOD FOR PRODUCING SAID ALDIMINE-MODIFIED SILICONE**

(30) Priority: 26.10.2023 JP 2023183660
(71) Applicant: SHIN-ETSU CHEMICAL CO., LTD., Tokyo 100-0005 (JP)
(72) Inventor: FUJITA Shoji, Annaka-shi, Gunma 379-0224 (JP)
(74) Representative: Schicker, Silvia
(86) International application number: PCT/JP2024/031426
(87) International publication number: WO 2025/088907

(57) **Abstract**

The present invention is an aldimine-modified silicone represented by the following formula (1).

(AR¹₂SiO_{1/2})ₐ(R¹₂SiO_{2/2})_{b}(R¹SiO_{3/2})_{c}(SiO_{4/2})_{d} (1)

In the formula, A is an aldimine group represented by the following formula (2), R¹ is independently a monovalent hydrocarbon group having 1 to 10 carbon atoms, "a" satisfies 2 ≤ a ≤ 5, "b" satisfies 0 < b ≤ 200, "c" satisfies 0 ≤ c ≤ 1, and "d" satisfies 0 ≤ d ≤ 1. Provided that 2 ≤ a+b+c+d ≤ 200.

-Q¹-CH=N-R² (2)

In the formula, Q¹ is a divalent hydrocarbon group having 2 to 10 carbon atoms, and R² is a monovalent hydrocarbon group having 1 to 10 carbon atoms.

Thus, the present invention provides an aldimine-modified silicone that enables long-term storage of the silicone resin composition as one-part without chemical modification to a polyamine compound; and a method for producing the same.

## Description

### TECHNICAL FIELD

The present invention relates to an aldimine-modified silicone and a moisture curable silicone resin composition containing the same, and a method for producing the aldimine-modified silicone.

### BACKGROUND ART

Known is a silicone resin composition containing: a modified silicone having a reactive functional group such as an aldehyde, an acid anhydride, an acryl, a maleimide, and an epoxy; and a polyamine compound as a crosslinking agent. However, it is difficult to store the above composition in a long term in a state of a mixture called one-part composition because the above composition has a high reaction rate.

A method is known for improving the storage stability of the one-part composition by allowing a ketone compound to act on the polyamine compound to form a polyketimine compound (Patent Documents 1 and 2). However, the polyketimine compound still retains nucleophilicity at a nitrogen atom of the ketimine group, and thus, the polyketimine compound is unsuitable for a long-term storage over several months to several years.

### CITATION LIST

### PATENT LITERATURE

Patent Document 1: JP H5-271389 A
Patent Document 2: JP H10-060227 A

### SUMMARY OF INVENTION

### TECHNICAL PROBLEM

The present invention has been made in view of the above circumstances. An object of the present invention is to provide: an aldimine-modified silicone that enables long-term storage of the silicone resin composition as one-part without chemical modification to the polyamine compound; and a method for producing the same.

### SOLUTION TO PROBLEM

To solve the above problem, the present invention provides an aldimine-modified silicone described below and a moisture curable silicone resin composition containing the same, and a method for producing the aldimine-modified silicone.

Specifically, the present invention provides an aldimine-modified silicone represented by the following formula (1):

(AR¹₂SiO_{1/2})ₐ(R¹₂SiO_{2/2})_{b}(R¹SiO_{3/2})_{c}(SiO_{4/2})_{d} (1)

wherein A is an aldimine group represented by the following formula (2), R¹ is independently a monovalent hydrocarbon group having 1 to 10 carbon atoms, "a" satisfies 2 ≤ a ≤ 5, "b" satisfies 0 < b ≤ 200, "c" satisfies 0 ≤ c ≤ 1, and "d" satisfies 0 ≤ d ≤ 1, provided that 2 ≤ a+b+c+d ≤ 200,

   -Q¹-CH=N-R² (2)
wherein Q¹ is a divalent hydrocarbon group having 2 to 10 carbon atoms, and R² is a monovalent hydrocarbon group having 1 to 10 carbon atoms.

The aldimine-modified silicone represented by the formula (1) is preferably represented by the following formula (3): 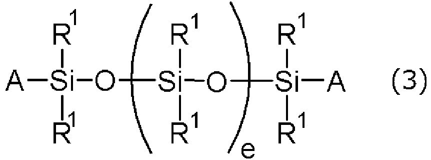 wherein A and R¹ are the same as in the formula (1), and "e" is a number of 1 to 150.

These aldimine-modified silicones exhibit excellent storage stability when used as a moisture curable silicone resin composition containing a polyamine compound, and also have good balance with a rate of curing by moisture.

The present invention provides a moisture curable silicone resin composition comprising: the aldimine-modified silicone of the present invention; and a polyamine compound.

In the moisture curable silicone resin composition of the present invention, the polyamine compound is preferably an amino-modified silicone represented by the following formula (7): 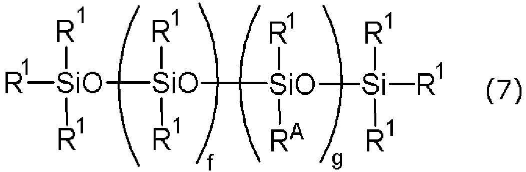
wherein R¹ is independently the same as in the formula (1), R^{A} is an amino group represented by the following formula (8), "f" is a number of 1 to 200, and "g" is a number of 2 to 50, 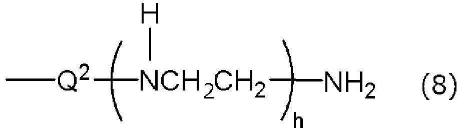
wherein Q² is an alkylene group having 1 to 8 carbon atoms, and "h" is an integer of 0 to 4.

The moisture curable silicone resin composition of the present invention as above can remain liquid at room temperature in a sealed container while having curability in the atmosphere.

The present invention provides a method for producing the aldimine-modified silicone of the present invention represented by the formula (1), the method comprising:
reacting an aldehyde-modified silicone represented by the following formula (4) with a primary amine compound represented by the following formula (6),

   (A'R¹₂SiO_{1/2})ₐ(R¹₂SiO_{2/2})_{b}(R¹SiO_{3/2})_{c}(SiO_{4/2})_{d} (4)
wherein R¹ is independently the same as in the formula (1), "a", "b" "c" and "d" are also the same as in the formula (1), and A' is an aldehyde group represented by the following formula (5):

   Q¹-CH=O (5)

   wherein Q¹ is the same as in the formula (2),

      H₂N-R² (6)
   wherein R² is a monovalent hydrocarbon group having 1 to 10 carbon atoms.

By the above producing method, the aldimine-modified silicone suitable for the moisture curable silicone resin composition of the present invention can be produced.

### ADVANTAGEOUS EFFECTS OF INVENTION

The aldimine-modified silicone of the present invention exhibits excellent storage stability when used in the moisture curable silicone resin composition containing the polyamine compound, and also has balance with a rate of curing by moisture. This moisture curable silicone resin composition can be used as a resin modifier, a sealing material, a pressure-sensitive adhesive, an adhesive, etc.

### DESCRIPTION OF EMBODIMENTS

As noted above, there has been a demand for development of a moisture curable silicone resin composition that enables long-term storage of the silicone resin composition as one-part without chemical modification to a polyamine compound.

The present inventor has made earnest study to solve the above problem, and consequently found that an aldimine-modified silicone obtained from an aldehyde-modified silicone and a primary amine enables long-term storage as one-part when used as the composition with a polyamine compound. This finding had led to completion of the present invention.

Specifically, the present invention is the aldimine-modified silicone represented by the formula (1) and the moisture curable silicone resin composition containing the same, and the method for producing the aldimine-modified silicone.

Hereinafter, the present invention will be described in detail, but the present invention is not limited thereto.

### [Aldimine-modified silicone]

The aldimine-modified silicone of the present invention is represented by the following formula (1).

(AR¹₂SiO_{1/2})ₐ(R¹₂SiO_{2/2})_{b}(R¹SiO_{3/2})_{c}(SiO_{4/2})_{d} (1)

In the formula (1), R¹ is independently a monovalent hydrocarbon group having 1 to 10 carbon atoms, and preferably a monovalent hydrocarbon group selected from an alkyl group having 1 to 10 carbon atoms, an aryl group having 6 to 10 carbon atoms, and an aralkyl group having 7 to 10 carbon atoms. Examples of the alkyl group having 1 to 10 carbon atoms include: alkyl groups such as a methyl group, an ethyl group, a propyl group, and a butyl group; and cycloalkyl groups such as a cyclopentyl group and a cyclohexyl group. Examples of the aryl group having 6 to 10 carbon atoms include a phenyl group, a tolyl group, a xylyl group, and a naphthyl group. Examples of the aralkyl group having 7 to 10 carbon atoms include a benzyl group and a phenethyl group. Among these, a methyl group, a butyl group, a phenyl group, or a benzyl group is preferable, and a methyl group or a butyl group is more preferable.

In the formula (1), "a" satisfies 2 ≤ a ≤ 5, and is preferably 2, "b" satisfies 0 < b ≤ 200, preferably satisfies 1 ≤ b ≤ 100, and more preferably satisfies 5 ≤ b ≤ 60, "c" satisfies 0 ≤ c ≤ 1, and is preferably 0, "d" satisfies 0 ≤ d ≤ 1, and is preferably 0. Provided that 2 ≤ a+b+c+d ≤ 200, preferably 2 ≤ a+b+c+d ≤ 100, and more preferably 2 ≤ a+b+c+d ≤ 60.

When "a" in the formula (1) is less than 2, the resulting silicone resin composition exhibits insufficient moisture curability, and "a" is more than 5, the stability of the aldehyde-modified silicone (4) as the raw material deteriorates to cause difficulty in preparation, which is not preferable. In addition, when "b" is more than 200, the compatibility with the polyamine compound deteriorates, and when "c" or "d" is more than 1, the viscosity increases, resulting in poor handleability, which is not preferable.

Further, when a+b+c+d in the formula (1) is less than 2, the number of siloxane bonds is less than the minimum required number, and when a+b+c+d is more than 200, the compatibility with the polyamine compound is insufficient and the viscosity increases, resulting in poor handleability, which is not preferable.

A in the formula (1) is an aldimine group represented by the following formula (2).

-Q¹-CH=N-R² (2)

In the formula (2), Q¹ is a divalent hydrocarbon group having 2 to 10 carbon atoms, and preferably an alkylene group having 2 to 10 carbon atoms. Examples of the alkylene group having 2 to 10 carbon atoms include an ethylene group, a trimethylene group, a tetramethylene group, a pentamethylene group, a hexamethylene group, a heptamethylene group, an octamethylene group, a nonamethylene group, and a decamethylene group. Among these, an ethylene group or a heptamethylene group is preferable, and a heptamethylene group is more preferable.

In the formula (2), R² is a monovalent hydrocarbon group having 1 to 10 carbon atoms, and preferably an alkyl group having 1 to 10 carbon atoms. Examples of the alkyl group having 1 to 10 carbon atoms include: alkyl groups such as a methyl group, an ethyl group, a propyl group, and a butyl group; and cycloalkyl groups such as a cyclopentyl group and a cyclohexyl group.

In addition, a linear aldimine-modified silicone represented by the following formula (3), which satisfies c=d=0 in the formula (1), is preferable.

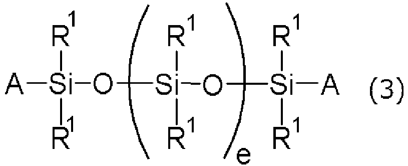

In the formula, A and R¹ are the same as in the formula (1), and "e" is a number of 1 to 150.

In addition, in the formula (3), "e" is a number of 1 to 150, preferably 1 to 100, and more preferably 5 to 60. When "e" is within the range of 1 or more and 150 or less, such an aldimine-modified silicone has excellent compatibility with various polyamine compounds and has viscosity suitable for handling, which is preferable.

### [Moisture curable silicone resin composition]

The moisture curable silicone resin composition of the present invention contains the above aldimine-modified silicone and a polyamine compound.

The polyamine compound used for the moisture curable silicone resin composition of the present invention has a structure of three or more primary or secondary amines, and may be any as long as it is compatible with the aldimine-modified silicone. Examples thereof include an amino-modified silicone represented by the following formula (7). Here, R^{A} in the formula (7) is an amino group represented by the following formula (8).

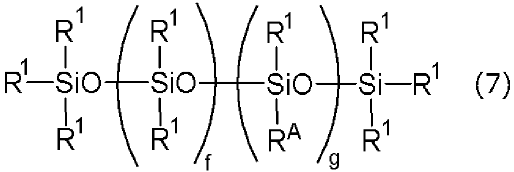

In the formula, R^{A} is an amino group represented by the following formula (8).

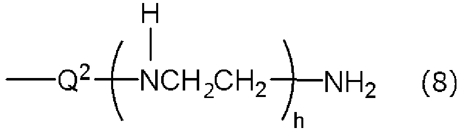

In the formula (7), "f" is a number of 1 to 200, preferably 1 to 100, and more preferably 20 to 80. In addition, "g" is a number of 2 to 50, preferably 2 to 25, and more preferably 2 to 10. "f" being within the range of 1 or more and 200 or less provides viscosity suitable for handling, which is preferable. Further, "g" being within the range of 2 or more and 50 or less provides good compatibility with the aldimine-modified silicone, which is preferable.

In the formula (8), Q² is an alkylene group having 1 to 8 carbon atoms, and preferably a propylene group. In addition, "h" is a number of 0 to 4, and preferably 0 to 1. "h" of 4 or less provides good compatibility with the aldimine-modified silicone, which is preferable.

In addition, the moisture curable silicone resin composition of the present invention may contain various additives such as an anti-aging agent such as titanium oxide, a pigment such as carbon, a filler such as calcium carbonate, an ultraviolet ray absorber, and a plasticizer in addition to the above main components. Note that these additives may be variously combined and added at any amount according to application of the silicone composition.

Since the moisture curable silicone resin composition of the present invention contains the aldimine-modified silicone of the present invention and the polyamine compound, an aldehyde-modified silicone is generated by moisture in the system from the aldimine-modified silicone, and this aldehyde-modified silicone yields addition reactivity with the polyamine compound to consequently exhibit a curing action. The aldimine-modified silicone can inhibit generation of the aldehyde-modified silicone by cutting off moisture, and thus, the storage stability is improved.

### [Method for producing aldimine-modified silicone]

The method for producing an aldimine-modified silicone of the present invention (hereinafter, which may be abbreviated to "the producing method of the present invention") includes a producing step of reacting an aldehyde group in an aldehyde-modified silicone represented by the following formula (4) with a primary amine represented by the following formula (6),

(A'R¹₂SiO_{1/2})ₐ(R¹₂SiO_{2/2})_{b}(R¹SiO_{3/2})_{c}(SiO_{4/2})_{d} (4)

H₂N-R² (6)

wherein R² is a monovalent hydrocarbon group having 1 to 10 carbon atoms.

In the formula (4), R¹ is preferably independently a group selected from an alkyl group having 1 to 10 carbon atoms, an aryl group having 6 to 10 carbon atoms, and an aralkyl group having 7 to 10 carbon atoms. Examples of the alkyl group having 1 to 10 carbon atoms include: alkyl groups such as a methyl group, an ethyl group, a propyl group, and a butyl group; and cycloalkyl groups such as a cyclopentyl group and a cyclohexyl group. Examples of the aryl group having 6 to 10 carbon atoms include a phenyl group, a tolyl group, a xylyl group, and a naphthyl group. Examples of the aralkyl group having 7 to 10 carbon atoms include a benzyl group and a phenethyl group. Among these, a methyl group, a butyl group, a phenyl group, or a benzyl group is preferable, and a methyl group or a butyl group is more preferable.

In the formula (4), "a" satisfies 2 ≤ a ≤ 5, and is preferably 2, "b" satisfies 0 < b ≤ 200, preferably 1 ≤ b ≤ 100, and more preferably 5 ≤ b ≤ 60, "c" satisfies 0 ≤ c ≤ 1, and is preferably 0, and "d" satisfies 0 ≤ d ≤ 1, and is preferably 0. Provided that 2 ≤ a+b+c+d ≤ 200, preferably 2 ≤ a+b+c+d ≤ 100, and more preferably 2 ≤ a+b+c+d ≤ 60.

In the formula (6), R² is a monovalent hydrocarbon group having 1 to 10 carbon atoms, and preferably an alkyl group having 1 to 10 carbon atoms. Examples of the alkyl group having 1 to 10 carbon atoms include: alkyl groups such as a methyl group, an ethyl group, a propyl group, and a butyl group; and cycloalkyl groups such as a cyclopentyl group and a cyclohexyl group. Among these, a butyl group, a hexyl group, or an octyl group is preferable, and an octyl group is more preferable.

A' in the formula (4) is an aldehyde group represented by the following formula (5).

-Q¹-CH=O (5)

In the formula (5), Q¹ is a divalent hydrocarbon group having 2 to 10 carbon atoms, and preferably an alkylene group having 2 to 10 carbon atoms. Examples of the alkylene group having 2 to 10 carbon atoms include an ethylene group, a trimethylene group, a tetramethylene group, a pentamethylene group, a hexamethylene group, a heptamethylene group, an octamethylene group, a nonamethylene group, and a decamethylene group. Among these, an ethylene group or a heptamethylene group is preferable, and a heptamethylene group is more preferable.

The producing method of the present invention includes reacting the aldehyde-modified silicone and the primary amine to obtain the aldimine-modified silicone. Here, a mixing molar ratio between the aldehyde-modified silicone and the primary amine is set to be preferably within a range of 1.0 to 5.0 mol, and further preferably within a range of 1.0 to 2.0 mol of the primary amine relative to 1 mol of the aminoaldehyde-modified silicone. This is because, when a number of moles of the primary amine relative to 1 mol of the aldehyde-modified silicone is less than the above range, the highly reactive aldehyde group derived from the aldehyde-modified silicone as the raw material easily remains in a final product, and because a number of moles of more than the above range excessively decreases a pot yield during production, which is disadvantageous in terms of cost.

The reaction between the aldehyde-modified silicone and the primary amine proceeds without heating, but may be heated. The reaction temperature is typically within a range of 10°C to 120°C, and more preferably within a range of 10°C to 60°C.

A reaction time in the producing method of the present invention is not particularly limited, but preferably 1 to 24 hours, more preferably 2 to 12 hours, and most preferably 2 to 4 hours.

### EXAMPLE

Hereinafter, the present invention will be further specifically described with Examples and Comparative Examples, but may be appropriately modified without departing from the spirit of the present invention. Therefore, the scope of the present invention is not limitedly interpreted by specific examples described below.

### <¹H-NMR>

¹H-NMR described in Examples was measured with AVANCE-III 400 MHz (manufactured by Bruker Corporation) by using deuterated chloroform as a solvent and by using tetramethylsilane (TMS) as a standard.

### <Example 1-1>

An aldimine-modified silicone represented by the following formula (10) was produced. Specifically, 10.0 g (4.5 mmol) of an aldehyde-modified silicone represented by the following formula (9) was fed, then 0.59 g (1.0 equivalent) of octylamine was fed under a nitrogen atmosphere at 25°C in a stirring state, and a reaction was performed at 23°C for 2 hours. In ¹H-NMR, a peak at 9.8 ppm derived from the aldehyde group disappeared and a peak derived from an aldimine group newly appeared at 7.7 ppm, and thus, it was observed to generate an aldimine-modified silicone represented by the following formula (10).

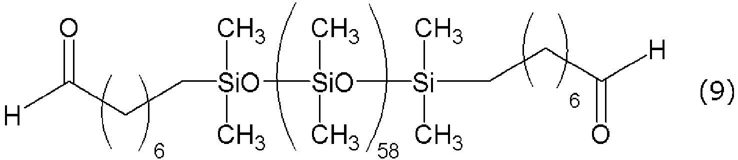

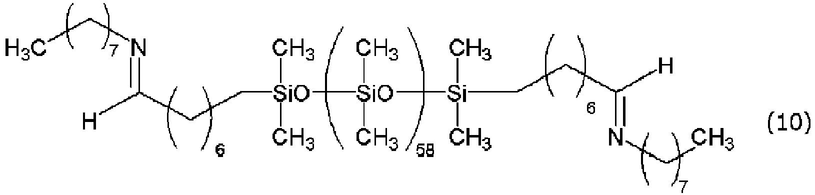

### <Example 1-2>

Into the aldimine-modified silicone (the formula (10)) obtained in Example 1-1, 3.83 g (1.0 equivalent) of an amino-modified silicone represented by the following formula (11) was fed, and the mixture was stirred at 23°C for 10 minutes to obtain a moisture curable silicone resin composition. The obtained moisture curable silicone resin composition was able to remain liquid for one year or more at a room temperature (25°C) in a sealed container while having the property of curing in 24 hours in the atmosphere.

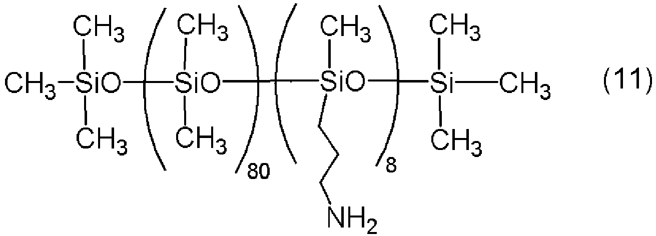

### <Example 2-1>

An aldimine-modified silicone represented by the following formula (13) was obtained by the method described in the Example 1-1 with replacing the aldehyde-modified silicone (the formula (9)) in the Example 1-1 with an aldehyde-modified silicone represented by the following formula (12).

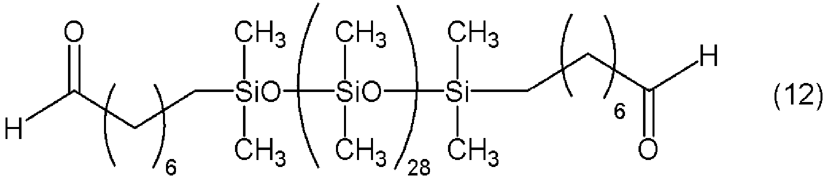

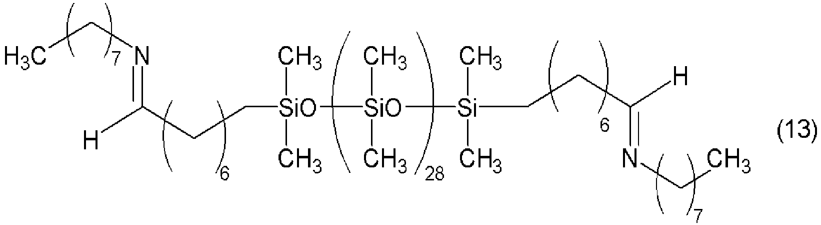

### <Example 2-2>

A moisture curable silicone resin composition was obtained from the aldimine-modified silicone (the formula (13)) and the amino-modified silicone (the formula (11)) by the method described in Example 1-2. The obtained silicone resin composition was able to remain liquid for one year or more at a room temperature in a sealed container while having the property of curing in 24 hours in the atmosphere.

### <Example 3-1>

An aldimine-modified silicone represented by the following formula (15) was obtained by the method described in the Example 1-1 with replacing the aldehyde-modified silicone (the formula (9)) in the Example 1-1 with an aldehyde-modified silicone represented by the following formula (14).

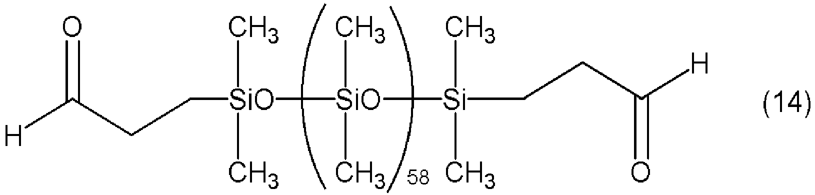

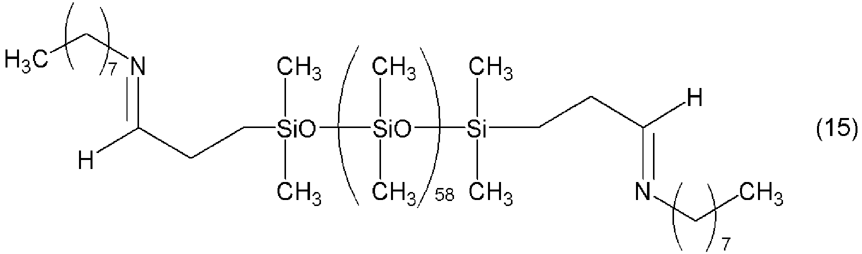

### <Example 3-2>

A moisture curable silicone resin composition was obtained from the aldimine-modified silicone (15) and the amino-modified silicone (11) by the method described in Example 1-2. The obtained silicone resin composition was able to remain liquid for one year or more at a room temperature in a sealed container while having the property of curing in 24 hours in the atmosphere.

### <Comparative Example 1>

A silicone resin composition was obtained by the method described in the Example 1-2 with replacing the aldimine-modified silicone (the formula (10)) in the Example 1-2 with the aldehyde-modified silicone (the formula (9)). The obtained silicone resin composition gelled one minute later at a room temperature in a sealed container.

### <Comparative Example 2>

A silicone resin composition was obtained by the method described in the Example 1-2 with replacing the aldimine-modified silicone (the formula (10)) in the Example 1-2 with an acid anhydride-modified silicone (16) represented by the following formula (16). The obtained silicone resin composition gelled one minute later at a room temperature in a sealed container.

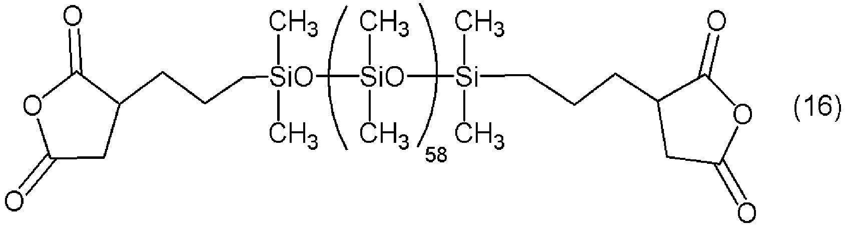

### <Comparative Example 3>

A silicone resin composition was obtained by the method described in the Example 1-2 with replacing the aldimine-modified silicone (the formula (10)) in the Example 1-2 with an acryl-modified silicone (17) represented by the following formula (17). The obtained silicone resin composition gelled 10 minutes later at a room temperature in a sealed container.

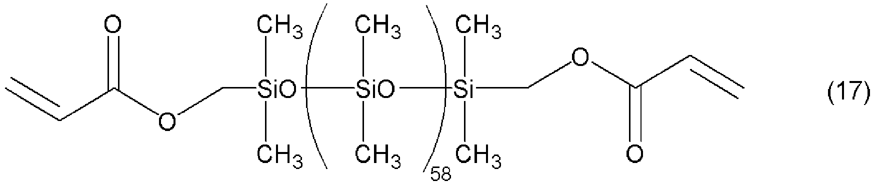

### <Comparative Example 4>

A silicone resin composition was obtained by the method described in the Example 1-2 with replacing the aldimine-modified silicone (the formula (10)) in the Example 1-2 with a maleimide-modified silicone (18) represented by the following formula (18). The obtained silicone resin composition gelled 10 minutes later at a room temperature in a sealed container.

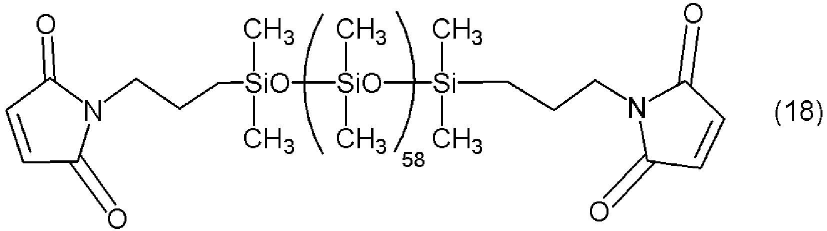

### <Comparative Example 5>

A silicone resin composition was obtained by the method described in the Example 1-2 with replacing the aldimine-modified silicone (the formula (10)) in the Example 1-2 with an epoxy-modified silicone (19) represented by the following formula (19). The obtained silicone resin composition gelled seven days later at a room temperature in a sealed container.

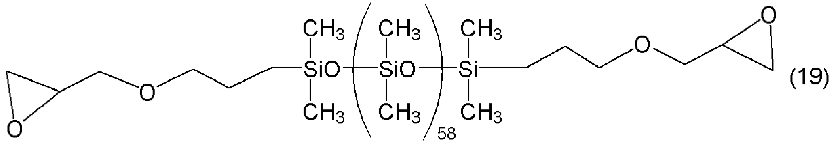

### <Comparative Example 6>

A silicone resin composition was obtained by the method described in the Example 1-2 with replacing the aldimine-modified silicone (the formula (10)) in the Example 1-2 with an aldimine-modified silicone (20) represented by the following formula (20). The obtained silicone resin composition was not cured in the atmosphere.

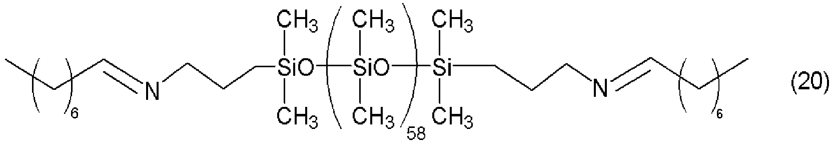

### <Comparative Example 7>

A silicone resin composition was obtained by the method described in the Example 1-2 with replacing the aldimine-modified silicone (the formula (10)) in the Example 1-2 with the aldehyde-modified silicone (the formula (9)), and replacing the amino-modified silicone (the formula (11)) with a ketimine-modified silicone represented by the following formula (21). The obtained silicone resin composition gelled one minute later at a room temperature in a sealed container.

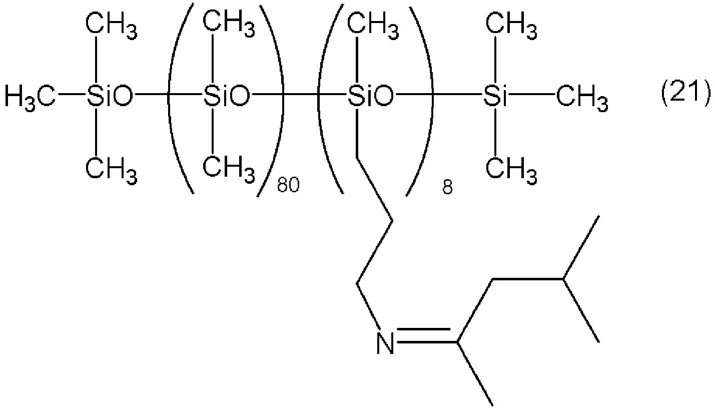

As shown in Examples 1-2 to 3-2, the moisture curable silicone resin compositions containing the aldimine-modified silicone of the present invention were able to remain liquid for one year or more at a room temperature in a sealed container while having the property of curing in 24 hours in the atmosphere. Meanwhile, as shown in Comparative Examples 1 to 7, the silicone resin compositions lacking the aldimine-modified silicone of the present invention gelled in a short time at a room temperature in a sealed container or were not cured in the atmosphere.

As above, the aldimine-modified silicone of the present invention exhibits excellent storage stability and good balance with a rate of curing by moisture when forming the moisture curable silicone resin composition containing the polyamine compound. In addition, the present invention has yielded the moisture curable silicone resin composition that contains the aldimine-modified silicone and that enables long-term storage of the silicone resin composition as one-part without chemical modification to the polyamine compound.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. An aldimine-modified silicone represented by the following formula (1):
(AR¹₂SiO_{1/2})ₐ(R¹₂SiO_{2/2})_{b}(R¹SiO_{3/2})_{c}(SiO_{4/2})_{d} (1)
wherein A is an aldimine group represented by the following formula (2), R¹ is independently a monovalent hydrocarbon group having 1 to 10 carbon atoms, "a" satisfies 2 ≤ a ≤ 5, "b" satisfies 0 < b ≤ 200, "c" satisfies 0 ≤ c ≤ 1, and "d" satisfies 0 ≤ d ≤ 1, provided that 2 ≤ a+b+c+d ≤ 200,
-Q¹-CH=N-R² (2)
wherein Q¹ is a divalent hydrocarbon group having 2 to 10 carbon atoms, and R² is a monovalent hydrocarbon group having 1 to 10 carbon atoms.

2. The aldimine-modified silicone according to claim 1, wherein the aldimine-modified silicone represented by the formula (1) is represented by the following formula (3): 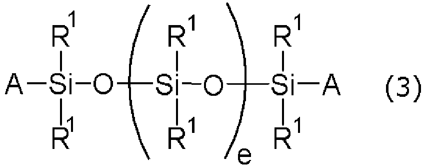 wherein A and R¹ are the same as in the formula (1), and "e" is a number of 1 to 150.

3. A moisture curable silicone resin composition, comprising:
the aldimine-modified silicone according to claim 1; and
a polyamine compound.

4. The moisture curable silicone resin composition according to claim 3, wherein the polyamine compound is an amino-modified silicone represented by the following formula (7): 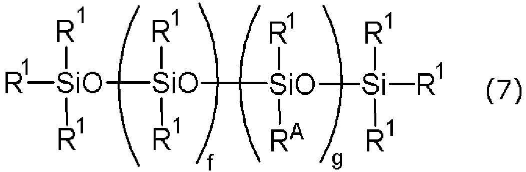
wherein R¹ is independently the same as in the formula (1), R^{A} is an amino group represented by the following formula (8), "f" is a number of 1 to 200, and "g" is a number of 2 to 50, 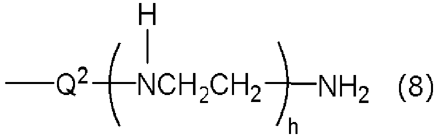
wherein Q² is an alkylene group having 1 to 8 carbon atoms, and "h" is an integer of 0 to 4.

5. A method for producing the aldimine-modified silicone represented by the formula (1) according to the claim 1, the method comprising:
reacting an aldehyde-modified silicone represented by the following formula (4) with a primary amine compound represented by the following formula (6),
(A'R¹₂SiO_{1/2})ₐ(R¹₂SiO_{2/2})_{b}(R¹SiO_{3/2})_{c}(SiO_{4/2})_{d} (4)
wherein R¹ is independently the same as in the formula (1), "a", "b", "c", and "d" are also the same as in the formula (1), and A' is an aldehyde group represented by the following formula (5):
Q¹-CH=O (5)
wherein Q¹ is the same as in the formula (2),
H₂N-R² (6)
wherein R² is a monovalent hydrocarbon group having 1 to 10 carbon atoms.
